# EUROPEAN PATENT SPECIFICATION

(11) **EP 4 597 268 B1**
(45) Date of publication and mention of the grant of the patent: **03.06.2026**
(21) Application number: 25152530.9
(22) Date of filing: 17.01.2025
(51) Int. Cl.: G06F 3/01

(54) **NOISE REDUCTION DURING EYE TRACKING IN ADAPTIVE EYEGLASSES**
RAUSCHVERMINDERUNG WÄHREND DER AUGENVERFOLGUNG BEI ADAPTIVEN BRILLEN
RÉDUCTION DU BRUIT PENDANT LE SUIVI OCULAIRE DANS DES LUNETTES ADAPTATIVES

(30) Priority: 05.02.2024 FI 20245117
(43) Date of publication of application: 06.08.2025
(73) Proprietor: Pixieray Oy, 02630 Espoo (FI)
(72) Inventor: Timonen, Juha, 02700 Kauniainen (FI); Auranen, Timo, 33720 Tampere (FI)
(74) Representative: Moosedog Oy

(56) References cited:
- WO-A1-2022/020434
- US-A1- 2018 299 953

## Description

### TECHNICAL FIELD

The present disclosure relates to tracking systems for adaptive eyeglasses. Moreover, the present disclosure relates to methods implemented by such tracking systems.

### BACKGROUND

Adaptive eyeglasses typically facilitate autofocus based on eye-tracking of a user's eyes. Such eye-tracking is often performed by emitting infrared (IR) light towards a given eye using one or more IR emitters and sampling IR signals representative of an intensity of the IR light (reflected off from the given eye) sensed using one or more IR sensors. As these IR signals are quite tiny (for example, could be more than 100dB lower than the IR light emitted by the IR emitters), the eye-tracking so performed is very noise sensitive. Moreover, the IR signals are sampled (namely, measured and collected) using an analogue front end (AFE), which is very sensitive to power supply noise and any signal coupling caused by an adjacent circuit operation (for example, other peripheral circuits related to other sensors in the adaptive eyeglasses).

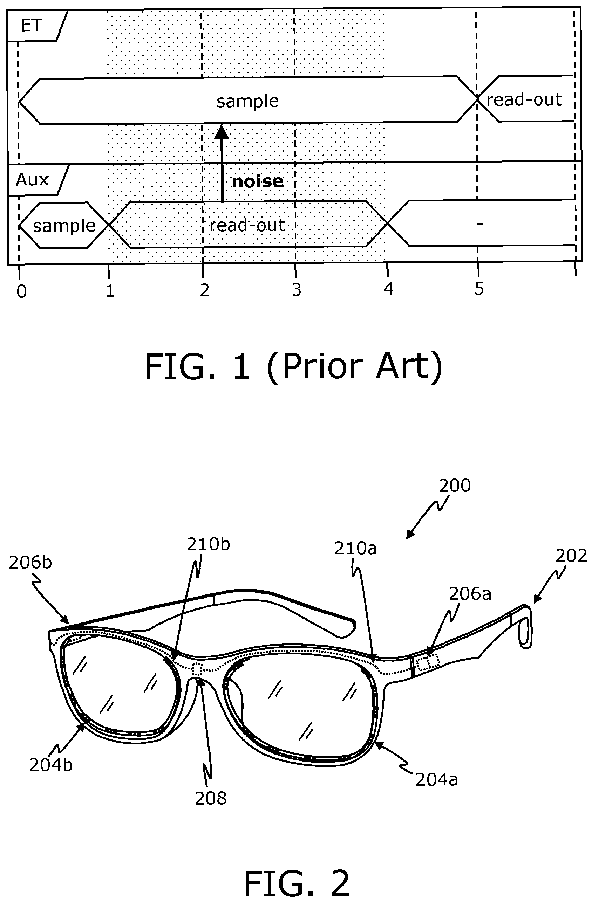

FIG. 1 depicts a timing diagram of various different activities of a conventional tracking system that are performed for a given eye; FIG. 1 represents prior art. In the timing diagram, units of time are marked on an x-axis. Activities of an eye-tracker are depicted in a top portion, marked **ET**, while activities of at least one auxiliary sensor are depicted in a bottom portion, marked **Aux.** As shown, a read-out from the at least one auxiliary sensor causes noise to IR signals that are being sampled by the eye-tracker.

The aforementioned problem of noise sensitivity is alleviated with a highly-integrated design of the adaptive eyeglasses, which increases unwanted signal-to-signal coupling and high impedance. Furthermore, small capacity batteries that are employed in the adaptive eyeglasses limit a light power of the IR light emitted by the IR emitters. Notably, even small loads can cause power rails to fluctuate, when the IR emitters or other peripheral circuits are powered.

In an attempt to solve the aforementioned problem, one conventional technique involves increasing local filtering, capacitance to signal and power rails, thereby leading to reduction in fluctuation and hence the noise. However, this approach is not feasible for highly-integrated wearable devices (such as the adaptive eyeglasses) due to space constraints.

Another commonly-used conventional technique is to time slot all activities in a sequential manner. In a tracking system, such an approach can lead to a slow response of the tracking system, due to several reasons. Firstly, low-priority slow activities may remain pending, when higher-priority activities are being started. Implementing priority-based algorithms to speed up the overall operation of the adaptive eyeglasses might lead to a complex situation, where some low-priority activities are not performed at sufficiently fast intervals, due to higher-priority activities repeating too fast. Secondly, it could also consume more power, due to a need for a microcontroller unit (namely, a processor) to be kept active for longer periods of time.

Background art document WO 2022/020434 A1 (MAGIC LEAP INC [US]) 2022-01-27 discloses alternating left-right eye tracking.

Therefore, in light of the foregoing discussion, there exists a need to solve the aforementioned problem of noise sensitivity, whilst overcoming the aforementioned drawbacks associated with conventional techniques.

### SUM MARY

The aim of the present disclosure is to provide a tracking system, and a method implemented by the tracking system that is capable of preventing noise sensitivity issues during eye-tracking. The aim of the present disclosure is achieved by tracking systems and methods as defined in the appended independent claims to which reference is made to. Advantageous features are set out in the appended dependent claims.

Throughout the description and claims of this specification, the words "*comprise*", "*include*", "*have*", and "*contain*" and variations of these words, for example "*comprising*" and "*comprises*", mean "*including but not limited to*", and do not exclude other components, items, integers or steps not explicitly disclosed also to be present. Moreover, the singular encompasses the plural unless the context otherwise requires. In particular, where the indefinite article is used, the specification is to be understood as contemplating plurality as well as singularity, unless the context requires otherwise.

### BRIEF DESCRIPTION OF THE DRAWINGS

FIG. 1 (Prior Art) depicts a timing diagram of various different activities of a conventional tracking system that are performed for a given eye.
FIG. 2 is a schematic diagram of a tracking system for an adaptive eyeglass, in accordance with an embodiment of the present disclosure;
FIG. 3 is a block diagram of a tracking system for an adaptive eyeglass, in accordance with an embodiment of the present disclosure.
FIG. 4 depicts a timing diagram of various activities of a tracking system that are performed for a left eye and a right eye, in accordance with a first embodiment of the present disclosure.
FIG. 5 depicts a timing diagram of various activities of a tracking system that are performed for the left eye and the right eye, in accordance with a second embodiment and a third embodiment of the present disclosure.

### DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practising the present disclosure are also possible.

In a first aspect, the present disclosure provides a tracking system for an adaptive eyeglass, the tracking system comprising:
a left eye-tracker and a right eye-tracker for a left part and a right part of the adaptive eyeglass, respectively, wherein each of the left eye-tracker (204a, 304a) and the right eye-tracker (204b, 304b) comprises a plurality of light emitters, a plurality of light sensors and an analog front end (AFE) chip, wherein the plurality of light emitters are implemented as infrared (IR) emitters, while the plurality of light sensors are implemented as IR sensors;
at least one left auxiliary sensor and at least one right auxiliary sensor arranged on the left part and the right part, respectively, wherein the at least one left auxiliary sensor and the at least one right auxiliary sensor are peripheral sensors;
a processor;
a left communication bus that is employed to communicably couple the processor to the at least one left auxiliary sensor; and
a right communication bus that is employed to communicably couple the processor to the at least one right auxiliary sensor,
wherein the processor is configured to:
temporarily disable communication between the at least one left auxiliary sensor and the left communication bus, whilst sampling left eye-tracking data using the left eye-tracker; and
temporarily disable communication between the at least one right auxiliary sensor and the right communication bus, whilst sampling right eye-tracking data using the right eye-tracker.

In a second aspect, the present disclosure provides a method implemented by a tracking system comprising a left eye-tracker and a right eye-tracker, at least one left auxiliary sensor and at least one right auxiliary sensor, a processor, a left communication bus communicably coupling the processor to the at least one left auxiliary sensor, and a right communication bus communicably coupling the processor to the at least one right auxiliary sensor, wherein each of the left eye-tracker and the right eye-tracker comprises a plurality of light emitters, a plurality of light sensors and an analog front end (AFE) chip, wherein the plurality of light emitters are implemented as infrared (IR) emitters, while the plurality of light sensors are implemented as IR sensors, and wherein the at least one left auxiliary sensor and the at least one right auxiliary sensor are peripheral sensors, the method comprising:
temporarily disabling communication between the at least one left auxiliary sensor and the left communication bus, whilst sampling left eye-tracking data using the left eye-tracker; and
temporarily disabling communication between the at least one right auxiliary sensor and the right communication bus, whilst sampling right eye-tracking data using the right eye-tracker.

Pursuant to the present disclosure, the tracking system and the method are capable of preventing any noise sensitivity issues during sampling of the eye-tracking data. This technical benefit is achieved by temporarily disabling the communication between the auxiliary sensor(s) and the communication bus for a given eye, when the eye-tracking data is being sampled from the eye tracker for the given eye. This allows to time-multiplex various activities of the eye-tracker and the auxiliary sensor(s) of the given eye (namely, the same eye) in a very selective, yet effective manner. In other words, the activities of the auxiliary sensor(s) of the given eye need not be stalled completely, while the eye-tracker of the given eye is working (namely, either sampling or reading out). For example, reading-out of sensor data from the auxiliary sensor(s) of the given eye can be performed while the eye-tracker of the given eye is also reading out. This allows the tracking system and the method to work most efficiently (namely, without any delays), whilst facilitating highly accurate eye-tracking. Moreover, such a very selective manner of time-multiplexing between the eye-tracker and the auxiliary sensor(s) for the same eye works seamlessly and synchronously when performed for both the eyes. This will be evident from examples provided later in the present disclosure.

For purposes of the present disclosure, there will now be provided some implementation examples of various components of the tracking system. Herein, each eye-tracker (namely, the left eye-tracker and the right eye-tracker) comprises the plurality of light emitters and the plurality of light sensors. Notably, each eye-tracker comprising the plurality of light emitters and the plurality of light sensors enables the eye-tracking to be performed without requiring the eye-tracker to come in contact with a user's face. In some implementations, the plurality of light emitters are implemented as infrared (IR) emitters, while the plurality of light sensors are implemented as IR sensors. It will be appreciated that the IR light emitted from the IR emitters is invisible to the human eye and remains unaffected from visible light sources (for example, sunlight, room lighting, and the like) which enables to minimize noise levels in the signals received by the IR sensors. In other implementations, the plurality of light emitters can be implemented as ultraviolet (UV) emitters, while the plurality of light sensors can be implemented as UV sensors. In this regard, the UV emitters and the UV sensors may operate with UV light lying in a range of wavelengths that are not harmful to the human eye. For example, a wavelength of the UV light may lie in a range from 315 nanometres to 400 nanometres.

In some implementations, each eye-tracker could comprise an analog front end (AFE) chip that converts analog signals received from the plurality of light sensors to digital signals. In other implementations, each of the plurality of light sensors could have a built-in AFE functionality within itself. Notably, the use of the AFE chip in each eye-tracker enables to amplify and enhance the quality of the analog signals received from the plurality of light sensors.

Examples of the adaptive eyeglasses include, but are not limited to, a pair of glasses, a pair of sunglasses, and smart glasses. The term "auxiliary sensor" refers to any peripheral sensor that is communicably coupled to the processor with a communication bus. Notably, the at least one left auxiliary sensor and the at least one right auxiliary sensor being peripheral sensors implies that the at least one left auxiliary sensor and the at least one right auxiliary sensor are arranged in the adaptive eyeglass without affecting an aesthetic appearance of the adaptive eyeglass. The at least one auxiliary sensor can be implemented as various different types of sensors. As an example, the at least one auxiliary sensor could comprise a temperature sensor that is employed to sense an ambient temperature. As another example, the at least one auxiliary sensor could comprise a UV sensor. As yet another example, the at least one auxiliary sensor could be a charge level sensor that is employed to sense a charge level of at least one rechargeable power source of the tracking system. As still another example, the at least one auxiliary sensor could be an ambient light sensor. Optionally, in this regard, the tracking system further comprises the at least one rechargeable power source that is employed to supply electrical power to the left eye-tracker, the right eye-tracker, the at least one left auxiliary sensor, the at least one right auxiliary sensor and the processor.

The processor can be implemented as a microcontroller, a controller, or a microprocessor. As an example, the processor could be implemented as an application-specific integrated circuit (ASIC) chip, or a reduced instruction set computer (RISC) chip.

The left communication bus communicably coupling the processor to the at least one left auxiliary sensor can be implemented as an Inter-Integrated Circuit (I2C) bus. Similarly, the right communication bus communicably coupling the processor to the at least one right auxiliary sensor can also be implemented as an I2C bus. It will be appreciated that there may be several communication buses in the tracking system. In some implementations, the left eye-tracker and the right eye-tracker may be communicably coupled to the processor via different buses, namely Serial Peripheral Interface (SPI) buses.

Throughout the present disclosure, the term "sampling" refers to measuring or collecting sensor data from a given sensor. In case of an eye-tracker, the term "sampling" refers to measuring or collecting eye-tracking data from the eye-tracker. It is known that reading out the sensor data from the at least one auxiliary sensor during sampling of the eye-tracking data for the same eye leads to noise in the eye-tracking data. The present disclosure provides various ways in which such a situation can be prevented.

In an embodiment, the left eye-tracking data and the right eye-tracking data are sampled in a time-multiplexed manner. It will be appreciated that such a time-multiplexing for sampling the left eye-tracking data and the right eye-tracking data is performed in addition to the aforementioned very selective time-multiplexing of activities between the auxiliary sensor(s) and the eye-tracker of the same eye. This allows the tracking system and the method to work most efficiently (namely, without any delays), whilst facilitating highly accurate eye-tracking for both the eyes.

For this purpose, the tracking system is electrically designed to support operations of the left side and the right side independently. In other words, separate communication buses are employed to isolate sensitive power lines and sensitive signals from each other, thereby allowing a peripheral circuit operation of an opposite eye to work seamlessly during alternating left and right eye tracking.

The overall time-multiplexing between the left eye-tracker and the right eye-tracker, and between the eye-tracker and the auxiliary sensor(s) of the same eye can be performed in various different ways, depending on a scenario in which the tracking system is operating. For illustration purposes only, there will now be considered a few different scenarios, for example, based on a charge level of the at least one rechargeable power source of the tracking system, ambient conditions of the tracking system (including ambient light conditions and ambient temperature), and additional circuitry power consumption.

Optionally, the processor is configured to:
read out the left eye-tracking data from the left eye-tracker, during a time period when the right eye-tracking data is being sampled; and
read out the right eye-tracking data from the right eye-tracker, during another time period when the left eye-tracking data is being sampled.

This may be a simplest way to time multiplex the sampling of the left eye-tracking data and the sampling of the right eye-tracking data, pursuant to the present disclosure. This can be used in combination with additional ways to time multiplex between the eye-tracker and the auxiliary sensor(s) of the same eye, to achieve the overall time-multiplexing between the left eye-tracker and the right eye-tracker, and between the eye-tracker and the auxiliary sensor(s) of the same eye can be performed.

### Case 1: High/medium charge level condition

In a first embodiment, the processor is configured to:
detect when a charge level of the at least one rechargeable power source is above a first predefined threshold level; and
when it is detected that the charge level is above the first predefined threshold level,
   read out left sensor data from the at least one left auxiliary sensor by allowing communication between the at least one left auxiliary sensor and the left communication bus, during a time period when the right eye-tracking data is being sampled; and
   read out right sensor data from the at least one right auxiliary sensor by allowing communication between the at least one right auxiliary sensor and the right communication bus, during another time period when the left eye-tracking data is being sampled.

In other words, the sensor data is read out from the auxiliary sensor(s) of the given eye when the eye-tracking data of another eye is being sampled. This does not cause any noise to the eye-tracking data of the other eye, because noise on the left communication bus does not affect the sampling of the right eye-tracking data (and vice versa).

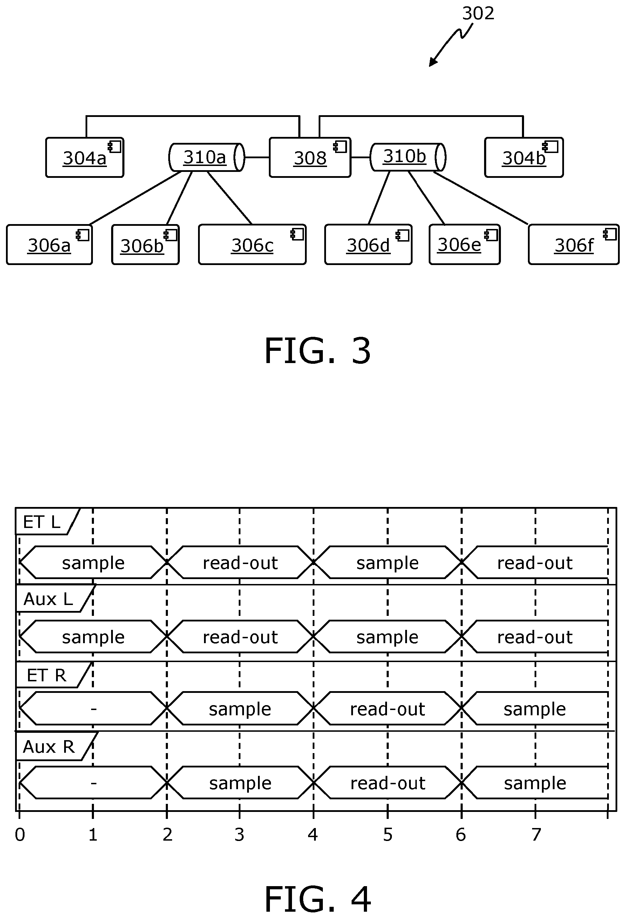

Moreover, as the sampling of the eye-tracking data for the left eye and the right eye is performed in the time-multiplexed manner (as mentioned earlier), this also means that the sensor data of the auxiliary sensor(s) of the given eye is read out when the eye-tracking data of the same eye is not being sampled. In fact, the sensor data of the auxiliary sensor(s) of the given eye can be read out when the eye-tracking data of the same eye is being read out. Notably, any noise during the read-out phase of the eye-tracker for the given eye does not affect the eye-tracking data that has been already sampled for the given eye. As a result, there is no noise in the eye-tracking data of the given eye (namely, the same eye) also. One example implementation of the first embodiment has been illustrated in conjunction with FIG. 4.

It will be appreciated that the at least one rechargeable power source could comprise separate rechargeable power sources for a left side and a right side of the adaptive eyeglass. In such a case, the charge level of the at least one rechargeable power source could refer to an overall charge level of the separate rechargeable power sources.

The first predefined threshold level could be either system defined by default or user-defined. The first predefined threshold level may, for example, lie in a range of 40 percent to 80 percent; more optionally, in a range of 50 percent to 70 percent.

### Case 2: Low charge level condition

In a second embodiment, the processor is configured to:
detect when the charge level of the at least one rechargeable power source is any one of: (i) not above the first predefined threshold level, (ii) below a second predefined threshold level; and
when it is detected that the charge level is any one of: (i) not above the first predefined threshold level, (ii) below the second predefined threshold level,
   read out left sensor data from the at least one left auxiliary sensor by allowing communication between the at least one left auxiliary sensor and the left communication bus, during every M^{th} cycle of sampling of the right eye-tracking data, wherein M is an integer whose value is greater than or equal to 2; and
   read out right sensor data from the at least one right auxiliary sensor by allowing communication between the at least one right auxiliary sensor and the right communication bus, during every N^{th} cycle of sampling of the left eye-tracking data, wherein N is an integer whose value is greater than or equal to 2.

This allows to reduce power consumption of the auxiliary sensor(s), thereby allowing the tracking system to utilise the remaining charge of the at least one rechargeable power source to focus on high priority tasks, such as eye-tracking. Moreover, by reducing the frequency of activities performed by the auxiliary sensor(s) and performing lesser number of activities in parallel, voltage fluctuations can be prevented during the low charge level condition.

In some implementations, there may be only one predefined threshold levels for the charge level, namely, the first predefined threshold level. In such implementations, the tracking system may be considered to have:
a high charge level, when the charge level is above the first predefined threshold level; and
a low charge level, when the charge level is not above the first predefined threshold level.

Accordingly, in such implementations, the charge level being (i) not above the first predefined threshold level corresponds to the low charge level.

In other implementations, there may be two separate predefined threshold levels for the charge level, namely, the first predefined threshold level and the second predefined threshold level, wherein the first predefined threshold level is higher than the second predefined threshold level. As an example, the first predefined threshold level could be 50 percent, while the second predefined threshold level could be 25 percent. In such implementations, the tracking system may be considered to have:
a high charge level, when the charge level is above the first predefined threshold level;
a medium charge level, when the charge level is not above the first predefined threshold level, but above the second predefined threshold level; and
a low charge level, when the charge level is below the second predefined threshold level.

Accordingly, in such implementations, the charge level being (ii) below the second predefined threshold level corresponds to the low charge level.

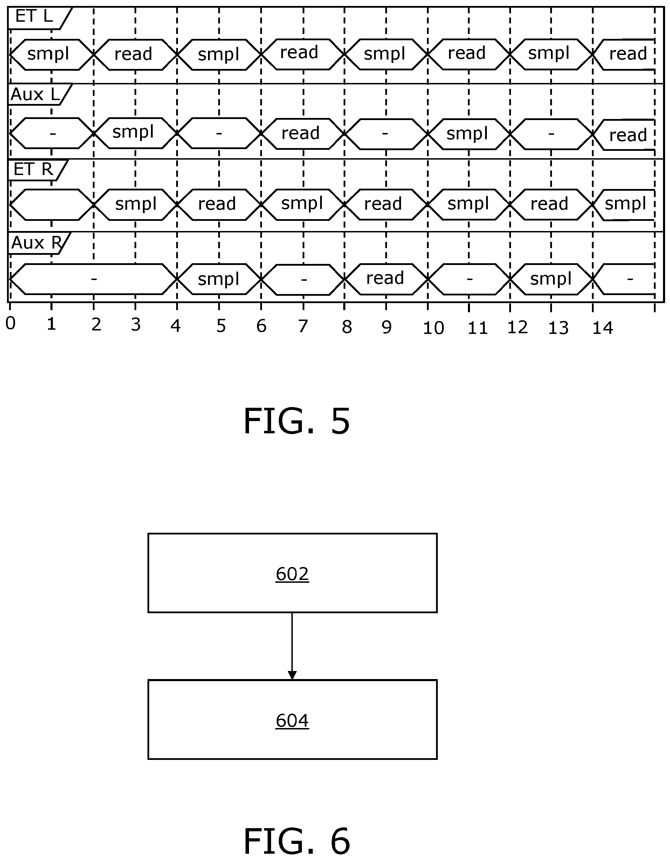

Referring to the operation of "read out left sensor data from the at least one left auxiliary sensor by allowing communication between the at least one left auxiliary sensor and the left communication bus, during every M^{th} cycle of sampling of the right eye-tracking data", if M were equal to 2, this would mean that the left sensor data would be read out during every 2^{nd} cycle of sampling of the right eye-tracking data. Moreover, it will be appreciated that for reading out the left sensor data in every M^{th} cycle of sampling of the right eye-tracking data, the left sensor data could be sampled during every M-1^{th} cycle of sampling of the right eye-tracking data. One example implementation of the second embodiment has been illustrated in conjunction with FIG. 5.

It will be appreciated that M and N can be much higher than 2, depending on how often the sensor data needs to be sampled. For example, in a case where the at least one auxiliary sensor comprises a charge level sensor and a temperature sensor, it may be preferred to read out the ambient temperature from the temperature sensor more often than reading out the charge level from the charge level sensor, when eye tracking is active. As an example, the charge level may be read out once every 5 seconds, which could mean that M for the charge level sensor is in an order of hundreds, for example 300 or more. Moreover, it will be appreciated that M and N can be different.

### Case 3: Hot/cold ambient condition

In a third embodiment, at least one of: the at least one left auxiliary sensor, the at least one right auxiliary sensor comprises a temperature sensor that is employed to sense an ambient temperature, and wherein the processor is configured to:
detect when the ambient temperature is any one of: (i) more than a first predefined threshold temperature, (ii) below a second predefined threshold temperature; and
when it is detected that the ambient temperature is any one of: (i) more than the first predefined threshold temperature, (ii) below the second predefined threshold temperature,
   read out left sensor data from the at least one left auxiliary sensor by allowing communication between the at least one left auxiliary sensor and the left communication bus, during every K^{th} cycle of sampling of the right eye-tracking data, wherein K is an integer whose value is greater than or equal to 2; and
   read out right sensor data from the at least one right auxiliary sensor by allowing communication between the at least one right auxiliary sensor and the right communication bus, during every L^{th} cycle of sampling of the left eye-tracking data, wherein L is an integer whose value is greater than or equal to 2.

This allows to reduce power consumption of the auxiliary sensor(s), thereby allowing the tracking system to utilise the remaining charge of the at least one rechargeable power source to focus on high priority tasks, such as eye-tracking, during the hot/cold ambient condition.

It will be appreciated that the ambient temperature being (i) more than the first predefined threshold temperature pertains to a hot ambient condition, while the ambient temperature being (ii) below the second predefined threshold temperature pertains to a cold ambient condition. As an example, the first predefined threshold temperature may lie in a range of 30 to 60 degree Celsius; more optionally, in a range of 40 to 50 degree Celsius. As another example, the second predefined threshold temperature may lie in a range of -10 to 5 degree Celsius; more optionally, in a range of -10 to 0 degree Celsius. It will be appreciated that the first predefined threshold temperature and the second predefined threshold temperature may be selected depending on a type of battery cell employed in the at least one rechargeable power source.

Moreover, it will be appreciated that K and L can be different.

It will also be appreciated that the hot/cold ambient condition (of Case 3) works quite similarly to the low charge level condition (of Case 2). This is because in the cold ambient condition, the tracking system behaves similar to the low charge level condition due to an increase in an internal impedance of the at least one rechargeable power source. In order to take this increase in the internal impedance into account, a voltage limit of the at least one rechargeable power source for the low charge level condition can be adjusted to be slightly higher in the cold ambient condition. In other words, parallel processing can be avoided at a higher battery voltage, in the cold ambient condition.

On the other hand, in the hot ambient condition, the internal impedance of the at least one rechargeable power source decreases, thereby reducing the noise during power-consuming tasks. However, this reduction in the noise is not very significant as compared to the overall noise that is experienced in the prior art due to parallel sampling of the eye-tracking data with reading out of the sensor data from the auxiliary sensor(s) for the same eye. Besides, current consumption of integrated circuits (namely, of the eye-tracker and the auxiliary sensor(s)) and the various communication buses increases in the hot ambient condition, thereby causing more noise coupling. As a result, the eye-tracker becomes less efficient in the hot ambient condition.

Therefore, in a scenario where both Case 2 and Case 3 are satisfied simultaneously, namely, the battery level is low and the ambient condition is hot or cold, the first predefined threshold level and/or the second predefined threshold level for the charge level can be modified. As an example, in very hot environments (for example, such as 45 degree Celsius or more), the first predefined threshold level and/or the second predefined threshold level can be decreased. As a result, the "low battery condition" would be satisfied sooner in the hot ambient condition, thereby enabling the tracking system to schedule and multiplex the various activities of the eye-tracker and the auxiliary sensor(s) for both the eyes optimally.

### Case 4: Bright outdoor environment condition

In a fourth embodiment, at least one of: the at least one left auxiliary sensor, the at least one right auxiliary sensor comprises a temperature sensor, and at least one of: the at least one left auxiliary sensor, the at least one right auxiliary sensor comprises at least one of: a UV sensor, an ambient light sensor, wherein a given eye-tracker comprises a plurality of light emitters and a plurality of light sensors,
wherein the processor is configured to:
detect at least one of: (i) when UV light intensities read out from the ultraviolet sensor are above a predefined threshold UV level, (ii) when an average illuminance read out from the ambient light sensor is above a predefined threshold illuminance; and
when at least one of following is detected: (i) the UV light intensities are above the predefined threshold UV level, (ii) the average illuminance is above the predefined threshold illuminance,
   increase an illumination intensity of each light emitter;
   decrease a sampling frequency of the temperature sensor; and
   increase a sampling frequency of the UV sensor.

When the UV light intensities are above the predefined threshold UV level, they could indicate a bright outdoor environment. The UV light intensities may be expressed in terms of the UV index (UVI). Accordingly, the predefined threshold UV level can also be defined in terms of UVI. Optionally, the predefined threshold UV level may lie in a range of 0.8 UVI to 1.2 UVI. As an example, the predefined threshold UV level may be 1 UVI; accordingly, a user of the adaptive eyeglass may be considered to be in a bright outdoor environment, when the UV light intensities read out from the ultraviolet sensor are above 1 UVI. It will be appreciated that typically, an indoor environment corresponds to a UV-index that is near zero.

Likewise, when the average illuminance is above the predefined threshold illuminance, it could indicate a bright outdoor environment. In a typical bright outdoor environment (namely, during daylight hours), the average illuminance may, for example, range from 10,000 lux to 100,000 lux or more. Accordingly, the predefined threshold illuminance may lie in a range of 5,000 lux to 10,000 lux.

It will be appreciated that using the ambient light sensor in combination with the UV sensor allows to improve the accuracy of detecting when the user is in a bright outdoor environment. This may be particularly beneficial when the UV sensor does not have a high accuracy.

In the bright outdoor environment condition, the illumination intensity of each light emitter is increased, thereby allowing the eye-tracker to sample the eye-tracking data more accurately. Notably, an increase in the ambient light level (which can be indicated by the UV light intensities read out from the ultraviolet sensor and/or by the average illuminance read out from the ambient light sensor) negatively impacts the accuracy of the light sensors; therefore, increasing the illumination intensity of the light emitters may allow to improve accuracy under such a condition. Optionally, the illumination intensity of a given light emitter is increased by a predefined percent that is selected based on the ultraviolet light intensities. As an example, the illumination intensity can be increased by 25 percent.

Moreover, in the bright outdoor environment condition, the sampling frequency of the temperature sensor can be decreased, thereby allowing the tracking system to utilise the remaining charge of the at least one rechargeable power source for high priority tasks, namely, eye tracking and increasing the illumination intensity of the light emitters. As an example, the sampling frequency of the temperature sensor can be decreased by 50 percent. As another example, the sampling frequency of the temperature sensor can be decreased by 90 percent.

Furthermore, in the bright outdoor environment condition, the sampling frequency of the UV sensor can be increased, thereby allowing the tracking system to identify any changes in the bright outdoor environment condition promptly. This further allows the tracking system to schedule various activities of the auxiliary sensor(s) accordingly. As an example, the sampling frequency of the UV sensor can be increased by 50 percent. As another example, the sampling frequency of the UV sensor can be increased by 100 percent.

In this way, the tracking system is configured to prevent noise coupling from internal signalling, whilst balancing power rails. As is evident from the aforementioned Cases 1 to 4, the tracking system can be configured to take into account different sources impacting internally generated noise in the tracking system, including ambient conditions (namely, the UV light intensities and the ambient temperature), power source condition (namely, the charge level and aging) and peripheral circuitry power consumption (for example, Bluetooth communication, UV sensor(s), temperature sensor(s), memory, inertial measurement unit (IMU), and the like) to time slot and adjust the sampling frequency, speed and parallelism of the various activities of the tracking system, to minimize communication bus and power rail noise, during sensitive AFE operation.

The present disclosure also relates to the method of the second aspect as described above. Various embodiments and variants disclosed above, with respect to the tracking system of the aforementioned first aspect, apply *mutatis mutandis* to the method of the second aspect.

Optionally, the left eye-tracking data and the right eye-tracking data are sampled in a time-multiplexed manner.

Optionally, the method further comprises:
reading out the left eye-tracking data from the left eye-tracker, during a time period when the right eye-tracking data is being sampled; and
reading out the right eye-tracking data from the right eye-tracker, during another time period when the left eye-tracking data is being sampled.

In a first embodiment, the method further comprises:
detecting when a charge level of the at least one rechargeable power source of the tracking system is above a first predefined threshold level; and
when it is detected that the charge level is above the first predefined threshold level,
   reading out left sensor data from the at least one left auxiliary sensor by allowing communication between the at least one left auxiliary sensor and the left communication bus, during a time period when the right eye-tracking data is being sampled; and
   reading out right sensor data from the at least one right auxiliary sensor by allowing communication between the at least one right auxiliary sensor and the right communication bus, during another time period when the left eye-tracking data is being sampled.

In a second embodiment, the method further comprises:
detecting when a charge level of the at least one rechargeable power source of the tracking system is any one of: (i) not above a first predefined threshold level, (ii) below a second predefined threshold level; and
when it is detected that the charge level is any one of: (i) not above the first predefined threshold level, (ii) below the second predefined threshold level,
   reading out left sensor data from the at least one left auxiliary sensor by allowing communication between the at least one left auxiliary sensor and the left communication bus, during every M^{th} cycle of sampling of the right eye-tracking data, wherein M is an integer whose value is greater than or equal to 2; and
   reading out right sensor data from the at least one right auxiliary sensor by allowing communication between the at least one right auxiliary sensor and the right communication bus, during every N^{th} cycle of sampling of the left eye-tracking data, wherein N is an integer whose value is greater than or equal to 2.

In a third embodiment, the method further comprises:
detecting when an ambient temperature of the tracking system is any one of: (i) more than a first predefined threshold temperature, (ii) below a second predefined threshold temperature; and
when it is detected that the ambient temperature is any one of: (i) more than the first predefined threshold temperature, (ii) below the second predefined threshold temperature,
   reading out left sensor data from the at least one left auxiliary sensor by allowing communication between the at least one left auxiliary sensor and the left communication bus, during every K^{th} cycle of sampling of the right eye-tracking data, wherein K is an integer whose value is greater than or equal to 2; and
   reading out right sensor data from the at least one right auxiliary sensor by allowing communication between the at least one right auxiliary sensor and the right communication bus, during every L^{th} cycle of sampling of the left eye-tracking data, wherein L is an integer whose value is greater than or equal to 2.

In a fourth embodiment, a given eye-tracker comprises a plurality of light emitters and a plurality of light sensors, the method further comprising:
detecting at least one of: (i) when ultraviolet light intensities read out from an ultraviolet sensor of the tracking system are above a predefined threshold ultraviolet level, (ii) when an average illuminance read out from an ambient light sensor of the tracking system is above a predefined threshold illuminance; and
when at least one of following is detected: (i) the ultraviolet light intensities are above the predefined threshold ultraviolet level, (ii) the average illuminance is above the predefined threshold illuminance,
   increasing an illumination intensity of each light emitter;
   decreasing a sampling frequency of a temperature sensor of the tracking system; and
   increasing a sampling frequency of the ultraviolet sensor.

### DETAILED DESCRIPTION OF THE DRAWINGS

Referring to FIG. 2, there is illustrated a schematic diagram of a tracking system **200** for an adaptive eyeglass 202, in accordance with an embodiment of the present disclosure. The tracking system **200** comprises a left eye-tracker **204a** and a right eye-tracker **204b** for a left part and a right part of the adaptive eyeglass **202,** respectively, wherein each of the left eye-tracker **204a** and the right eye-tracker **204b** comprises a plurality of light emitters, a plurality of light sensors and an analog front end (AFE) chip, wherein the plurality of light emitters are implemented as infrared (IR) emitters, while the plurality of light sensors are implemented as IR sensors; at least one left auxiliary sensor **206a** and at least one right auxiliary sensor **206b** arranged on the left part and the right part, respectively, wherein the at least one left auxiliary sensor **206a** and the at least one right auxiliary sensor **206b** are peripheral sensors; a processor **208;** a left communication bus **210a** that is employed to communicably couple the processor **208** to the at least one left auxiliary sensor **206a;** and a right communication bus **210b** that is employed to communicably couple the processor **208** to the at least one right auxiliary sensor **206b.** As shown in FIG. 2, the left part and the right part of the adaptive eyeglass **202** correspond to a left eye and a right eye of a user, respectively, when the adaptive eyeglass **202** is worn by the user.

The processor **208** is configured to:
temporarily disable communication between the at least one left auxiliary sensor **206a** and the left communication bus **210a,** whilst sampling left eye-tracking data using the left eye-tracker **204a**; and
temporarily disable communication between the at least one right auxiliary sensor **206b** and the right communication bus **210b**, whilst sampling right eye-tracking data using the right eye-tracker **204b**.

This prevents any noise sensitivity issues during sampling of the eye-tracking data.

Referring to FIG. 3, there is illustrated a block diagram of a tracking system **302** for an adaptive eyeglass, in accordance with an embodiment of the present disclosure. The tracking system **302** comprises a left eye-tracker **304a** and a right eye-tracker **304b**; at least one left auxiliary sensor (depicted as auxiliary sensors **306a-c**) and at least one right auxiliary sensor (depicted as auxiliary sensors **306d-f**); a processor **308**; a left communication bus **310a** that is employed to communicably couple the processor **308** to the at least one left auxiliary sensor **306a-c**; and a right communication bus **310b** that is employed to communicably couple the processor **308** to the at least one right auxiliary sensor **306d-f.**

The processor **308** is configured to:
temporarily disable communication between the at least one left auxiliary sensor **306a-c** and the left communication bus **310a,** whilst sampling left eye-tracking data using the left eye-tracker **304a**; and
temporarily disable communication between the at least one right auxiliary sensor **306d-f** and the right communication bus **310b**, whilst sampling right eye-tracking data using the right eye-tracker **304b**.

This prevents any noise sensitivity issues during sampling of the eye-tracking data.

FIGs. 2 and 3 are merely examples, which should not unduly limit the scope of the claims herein. A person skilled in the art will recognize many variations, alternatives, and modifications of embodiments of the present disclosure.

FIG. 4 depicts a timing diagram of various activities of a tracking system that are performed for a left eye and a right eye, in accordance with a first embodiment of the present disclosure. In the timing diagram, units of time are marked on an x-axis. Activities of a left eye-tracker are shown in a row marked **ET L,** while activities of a right eye-tracker are shown in another row marked **ET R.** Activities of at least one left auxiliary sensor are shown in a row marked **Aux L**, while activities of at least one right auxiliary sensor are shown in another row marked **Aux R**.

FIG. 4 pertains to a high/medium charge level condition (namely, Case 1). Accordingly, when it is detected that a charge level of at least one rechargeable power source of a tracking system is above a first predefined threshold level,
left sensor data is read out from at least one left auxiliary sensor by allowing communication between at least one left auxiliary sensor and a left communication bus, during a time period when right eye-tracking data is being sampled; and
right sensor data is read out from at least one right auxiliary sensor by allowing communication between at least one right auxiliary sensor and a right communication bus, during another time period when left eye-tracking data is being sampled.

In other words, the sensor data is read out from the auxiliary sensor(s) of the given eye when the eye-tracking data of another eye is being sampled. This does not cause any noise to the eye-tracking data of the other eye. Moreover, as the sampling of the eye-tracking data for the left eye and the right eye is performed in a time-multiplexed manner, the sensor data of the auxiliary sensor(s) of the given eye is read out when the eye-tracking data of the same eye is not being sampled. As shown in FIG. 4, the sensor data of the auxiliary sensor(s) of the given eye is read out when the eye-tracking data of the same eye is being read out. As a result, there is no noise in the eye-tracking data of the given eye (namely, the same eye) also.

FIG. 5 depicts a timing diagram of various activities of a tracking system that are performed for the left eye and the right eye, in accordance with a second embodiment and a third embodiment of the present disclosure. In the timing diagram, units of time are marked on an x-axis. Activities of a left eye-tracker are shown in a row marked **ET L,** while activities of a right eye-tracker are shown in another row marked **ET R.** Activities of at least one left auxiliary sensor are shown in a row marked **Aux L**, while activities of at least one right auxiliary sensor are shown in another row marked **Aux R.**

According to the second embodiment, FIG. 5 pertains to a low charge level condition (namely, Case 2). Accordingly, when it is detected that the charge level of the at least one rechargeable power source is any one of: (i) not above the first predefined threshold level, (ii) below the second predefined threshold level
left sensor data is read out from the at least one left auxiliary sensor by allowing communication between the at least one left auxiliary sensor and the left communication bus, during every M^{th} cycle of sampling of the right eye-tracking data; and
right sensor data is read out from the at least one right auxiliary sensor by allowing communication between the at least one right auxiliary sensor and the right communication bus, during every N^{th} cycle of sampling of the left eye-tracking data.

This allows to reduce power consumption of the auxiliary sensor(s), thereby allowing the tracking system to utilise the remaining charge of the at least one rechargeable power source to focus on high priority tasks, such as eye-tracking. Moreover, by reducing the frequency of activities performed by the auxiliary sensor(s) and performing lesser number of activities in parallel, voltage fluctuations can be prevented during the low charge level condition. With reference to FIG. 5, M and N are shown to be equal to 2. However, it will be appreciated that M and N can be much higher than 2, and for certain types of sensors be even as high as hundreds.

According to the third embodiment, FIG. 5 pertains to a hot/cold ambient condition (namely, Case 3). Accordingly, when it is detected that the ambient temperature is any one of: (i) more than the first predefined threshold temperature, (ii) below the second predefined threshold temperature,
left sensor data is read out from the at least one left auxiliary sensor by allowing communication between the at least one left auxiliary sensor and the left communication bus, during every K^{th} cycle of sampling of the right eye-tracking data; and
right sensor data is read out from the at least one right auxiliary sensor by allowing communication between the at least one right auxiliary sensor and the right communication bus, during every L^{th} cycle of sampling of the left eye-tracking data.

This allows to reduce power consumption of the auxiliary sensor(s), thereby allowing the tracking system to utilise the remaining charge of the at least one rechargeable power source to focus on high priority tasks, such as eye-tracking, during the hot/cold ambient condition. Moreover, by reducing the frequency of activities performed by the auxiliary sensor(s) and performing lesser number of activities in parallel, voltage fluctuations can be prevented during the hot/cold ambient condition. With reference to FIG. 5, K and L are shown to be equal to 2. However, it will be appreciated that K and L can be much higher than 2, and for certain types of auxiliary sensors be even as high as hundreds.

FIGs. 4 and 5 are merely examples, which should not unduly limit the scope of the claims herein. A person skilled in the art will recognize many variations, alternatives, and modifications of embodiments of the present disclosure.

Referring to FIG. 6, illustrated is a flowchart depicting steps of a method implemented by a tracking system comprising a left eye-tracker and a right eye-tracker, at least one left auxiliary sensor and at least one right auxiliary sensor, a processor, a left communication bus communicably coupling the processor to the at least one left auxiliary sensor, and a right communication bus communicably coupling the processor to the at least one right auxiliary sensor, wherein each of the left eye-tracker and the right eye-tracker comprises a plurality of light emitters, a plurality of light sensors and an analog front end (AFE) chip, wherein the plurality of light emitters are implemented as infrared (IR) emitters, while the plurality of light sensors are implemented as IR sensors, and wherein the at least one left auxiliary sensor and the at least one right auxiliary sensor are peripheral sensors. At step 602, communication between the at least one left auxiliary sensor and the left communication bus is temporarily disabled, whilst sampling left eye-tracking data using the left eye-tracker. At step 604, communication between the at least one right auxiliary sensor and the right communication bus is temporarily disabled, whilst sampling right eye-tracking data using the right eye-tracker.

The aforementioned steps are only illustrative and other alternatives can also be provided where one or more steps are added, one or more steps are removed, or one or more steps are provided in a different sequence. The scope of protection is defined by the appended claims.

## Claims

1. A tracking system (200, 302) for an adaptive eyeglass (202), the tracking system comprising:
a left eye-tracker (204a, 304a) and a right eye-tracker (204b, 304b) for a left part and a right part of the adaptive eyeglass, respectively, wherein each of the left eye-tracker and the right eye-tracker comprises a plurality of light emitters, a plurality of light sensors and an analog front end (AFE) chip, wherein the plurality of light emitters are implemented as infrared (IR) emitters, while the plurality of light sensors are implemented as IR sensors;
at least one left auxiliary sensor (206a, 306a-c) and at least one right auxiliary sensor (206b, 306d-f) arranged on the left part and the right part, respectively, wherein the at least one left auxiliary sensor and the at least one right auxiliary sensor are peripheral sensors;
a processor (208, 308);
a left communication bus (210a, 310a) that is employed to communicably couple the processor to the at least one left auxiliary sensor; and
right communication bus (210b, 310b) that is employed to communicably couple the processor to the at least one right auxiliary sensor,
wherein the processor is configured to:
temporarily disable communication between the at least one left auxiliary sensor and the left communication bus, whilst sampling left eye-tracking data using the left eye-tracker; and
temporarily disable communication between the at least one right auxiliary sensor and the right communication bus, whilst sampling right eye-tracking data using the right eye-tracker.

2. The tracking system (200, 302) of claim 1, wherein the left eye-tracking data and the right eye-tracking data are sampled in a time-multiplexed manner.

3. The tracking system (200, 302) of any of the preceding claims, wherein the processor (208, 308) is configured to:
read out the left eye-tracking data from the left eye-tracker (204a, 304a), during a time period when the right eye-tracking data is being sampled; and
read out the right eye-tracking data from the right eye-tracker (204b, 304b), during another time period when the left eye-tracking data is being sampled.

4. The tracking system (200, 302) of any of the preceding claims, further comprising at least one rechargeable power source that is employed to supply electrical power to the left eye-tracker (204a, 304a), the right eye-tracker (204b, 304b), the at least one left auxiliary sensor (206a, 306a-c), the at least one right auxiliary sensor (206b, 306d-f) and the processor (208, 308),
wherein the processor is configured to:
detect when a charge level of the at least one rechargeable power source is above a first predefined threshold level; and
when it is detected that the charge level is above the first predefined threshold level,
read out left sensor data from the at least one left auxiliary sensor by allowing communication between the at least one left auxiliary sensor and the left communication bus (210a, 310a), during a time period when the right eye-tracking data is being sampled; and
read out right sensor data from the at least one right auxiliary sensor by allowing communication between the at least one right auxiliary sensor and the right communication bus (210b, 310b), during another time period when the left eye-tracking data is being sampled.

5. The tracking system (200, 302) of any of the preceding claims, further comprising at least one rechargeable power source that is employed to supply electrical power to the left eye-tracker (204a, 304a), the right eye-tracker (204b, 304b), the at least one left auxiliary sensor (206a, 306a-c), the at least one right auxiliary sensor (206b, 306d-f) and the processor (208, 308),
wherein the processor is configured to:
detect when a charge level of the at least one rechargeable power source is any one of: (i) not above a first predefined threshold level, (ii) below a second predefined threshold level; and
when it is detected that the charge level is any one of: (i) not above the first predefined threshold level, (ii) below the second predefined threshold level,
read out left sensor data from the at least one left auxiliary sensor by allowing communication between the at least one left auxiliary sensor and the left communication bus (210a, 310a), during every M^{th} cycle of sampling of the right eye-tracking data, wherein M is an integer whose value is greater than or equal to 2; and
read out right sensor data from the at least one right auxiliary sensor by allowing communication between the at least one right auxiliary sensor and the right communication bus (210b, 310b), during every N^{th} cycle of sampling of the left eye-tracking data, wherein N is an integer whose value is greater than or equal to 2.

6. The tracking system (200, 302) of any of the preceding claims, wherein at least one of: the at least one left auxiliary sensor (206a, 306a-c), the at least one right auxiliary sensor (206b, 306d-f) comprises a temperature sensor that is employed to sense an ambient temperature, and wherein the processor (208, 308) is configured to:
detect when the ambient temperature is any one of: (i) more than a first predefined threshold temperature, (ii) below a second predefined threshold temperature; and
when it is detected that the ambient temperature is any one of: (i) more than the first predefined threshold temperature, (ii) below the second predefined threshold temperature,
read out left sensor data from the at least one left auxiliary sensor by allowing communication between the at least one left auxiliary sensor and the left communication bus (210a, 310a), during every K^{th} cycle of sampling of the right eye-tracking data, wherein K is an integer whose value is greater than or equal to 2; and
read out right sensor data from the at least one right auxiliary sensor by allowing communication between the at least one right auxiliary sensor and the right communication bus (210b, 310b), during every L^{th} cycle of sampling of the left eye-tracking data, wherein L is an integer whose value is greater than or equal to 2.

7. The tracking system (200, 302) of any of the preceding claims, wherein at least one of: the at least one left auxiliary sensor (206a, 306a-c), the at least one right auxiliary sensor (206b, 306d-f) comprises a temperature sensor, and at least one of: the at least one left auxiliary sensor, the at least one right auxiliary sensor comprises at least one of: an ultraviolet sensor, an ambient light sensor, wherein a given eye-tracker comprises a plurality of light emitters and a plurality of light sensors,
wherein the processor (208, 308) is configured to:
detect at least one of: (i) when ultraviolet light intensities read out from the ultraviolet sensor are above a predefined threshold ultraviolet level, (ii) when an average illuminance read out from the ambient light sensor is above a predefined threshold illuminance; and
when at least one of following is detected: (i) the ultraviolet light intensities are above the predefined threshold ultraviolet level, (ii) the average illuminance is above the predefined threshold illuminance,
increase an illumination intensity of each light emitter;
decrease a sampling frequency of the temperature sensor; and
increase a sampling frequency of the ultraviolet sensor.

8. A method implemented by a tracking system (200, 302) comprising a left eye-tracker (204a, 304a) and a right eye-tracker (204b, 304b), at least one left auxiliary sensor (206a, 306a-c) and at least one right auxiliary sensor (206b, 306d-f), a processor (208, 308), a left communication bus (210a, 310a) communicably coupling the processor to the at least one left auxiliary sensor, and a right communication bus (210b, 310b) communicably coupling the processor to the at least one right auxiliary sensor, wherein each of the left eye-tracker and the right eye-tracker comprises a plurality of light emitters, a plurality of light sensors and an analog front end (AFE) chip, wherein the plurality of light emitters are implemented as infrared (IR) emitters, while the plurality of light sensors are implemented as IR sensors, and wherein the at least one left auxiliary sensor and the at least one right auxiliary sensor are peripheral sensors, the method comprising:
temporarily disabling communication between the at least one left auxiliary sensor and the left communication bus, whilst sampling left eye-tracking data using the left eye-tracker; and
temporarily disabling communication between the at least one right auxiliary sensor and the right communication bus, whilst sampling right eye-tracking data using the right eye-tracker.

9. The method of claim 8, wherein the left eye-tracking data and the right eye-tracking data are sampled in a time-multiplexed manner.

10. The method of any of claims 8-9, further comprising:
reading out the left eye-tracking data from the left eye-tracker (204a, 304a), during a time period when the right eye-tracking data is being sampled; and
reading out the right eye-tracking data from the right eye-tracker (204b, 304b), during another time period when the left eye-tracking data is being sampled.

11. The method of any of claims 8-10, further comprising:
detecting when a charge level of at least one rechargeable power source of the tracking system (200, 302) is above a first predefined threshold level; and
when it is detected that the charge level is above the first predefined threshold level,
reading out left sensor data from the at least one left auxiliary sensor (206a, 306a-c) by allowing communication between the at least one left auxiliary sensor and the left communication bus (210a, 310a), during a time period when the right eye-tracking data is being sampled; and
reading out right sensor data from the at least one right auxiliary sensor (206b, 306d-f) by allowing communication between the at least one right auxiliary sensor and the right communication bus (210b, 310b), during another time period when the left eye-tracking data is being sampled.

12. The method of any of claims 8-11, further comprising:
detecting when a charge level of at least one rechargeable power source of the tracking system (200, 302) is any one of: (i) not above a first predefined threshold level, (ii) below a second predefined threshold level; and
when it is detected that the charge level is any one of: (i) not above the first predefined threshold level, (ii) below the second predefined threshold level,
reading out left sensor data from the at least one left auxiliary sensor (206a, 306a-c) by allowing communication between the at least one left auxiliary sensor and the left communication bus (210a, 310a), during every M^{th} cycle of sampling of the right eye-tracking data, wherein M is an integer whose value is greater than or equal to 2; and
reading out right sensor data from the at least one right auxiliary sensor (206b, 306d-f) by allowing communication between the at least one right auxiliary sensor and the right communication bus (210b, 310b), during every N^{th} cycle of sampling of the left eye-tracking data, wherein N is an integer whose value is greater than or equal to 2.

13. The method of any of claims 8-12, further comprising:
detecting when an ambient temperature of the tracking system (200, 302) is any one of: (i) more than a first predefined threshold temperature, (ii) below a second predefined threshold temperature; and
when it is detected that the ambient temperature is any one of: (i) more than the first predefined threshold temperature, (ii) below the second predefined threshold temperature,
reading out left sensor data from the at least one left auxiliary sensor (206a, 306a-c) by allowing communication between the at least one left auxiliary sensor and the left communication bus (210a, 310a), during every K^{th} cycle of sampling of the right eye-tracking data, wherein K is an integer whose value is greater than or equal to 2; and
reading out right sensor data from the at least one right auxiliary sensor (206b, 306d-f) by allowing communication between the at least one right auxiliary sensor and the right communication bus (210b, 310b), during every L^{th} cycle of sampling of the left eye-tracking data, wherein L is an integer whose value is greater than or equal to 2.

14. The method of any of claims 8-13, wherein a given eye-tracker comprises a plurality of light emitters and a plurality of light sensors, the method further comprising:
detecting at least one of: (i) when ultraviolet light intensities read out from an ultraviolet sensor of the tracking system (200, 302) are above a predefined threshold ultraviolet level, (ii) when an average illuminance read out from an ambient light sensor of the tracking system is above a predefined threshold illuminance; and
when at least one of following is detected: (i) the ultraviolet light intensities are above the predefined threshold ultraviolet level, (ii) the average illuminance is above the predefined threshold illuminance,
increasing an illumination intensity of each light emitter;
decreasing a sampling frequency of a temperature sensor of the tracking system; and
increasing a sampling frequency of the ultraviolet sensor.

## Patentansprüche

1. Verfolgungssystem (200, 302) für eine adaptive Brille (202), wobei das Verfolgungssystem umfasst:
einen Verfolger (204a, 304a) für das linke Auge und einen Verfolger (204b, 304b) für das rechte Auge für einen linken Teil bzw. einen rechten Teil der adaptiven Brille, wobei jeder von dem Verfolger für das linke Auge und dem Verfolger für das rechte Auge eine Vielzahl von Lichtemittern, eine Vielzahl von Lichtsensoren und einen Analog-Front-End-Chip (AFE-Chip) umfasst, wobei die Vielzahl von Lichtemittern als Infrarot-Emitter (IR-Emitter) implementiert sind, während die Vielzahl von Lichtsensoren als IR-Sensoren implementiert sind;
mindestens einen linken Hilfssensor (206a, 306a-c) und mindestens einen rechten Hilfssensor (206b, 306d-f), die an dem linken Teil bzw. dem rechten Teil angeordnet sind, wobei der mindestens eine linke Hilfssensor und der mindestens eine rechte Hilfssensor periphere Sensoren sind;
einen Prozessor (208, 308);
einen linken Kommunikationsbus (210a, 310a), der verwendet wird, um den Prozessor kommunikativ mit dem mindestens einen linken Hilfssensor zu koppeln; und
einen rechten Kommunikationsbus (210b, 310b), der verwendet wird, um den Prozessor kommunikativ mit dem mindestens einen rechten Hilfssensor zu koppeln,
wobei der Prozessor konfiguriert ist zum:
vorübergehenden Deaktivieren der Kommunikation zwischen dem mindestens einen linken Hilfssensor und dem linken Kommunikationsbus, während Daten bezüglich der Verfolgung des linken Auges unter Verwendung des Verfolgers für das linke Auge abgetastet werden; und
vorübergehenden Deaktivieren der Kommunikation zwischen dem mindestens einen rechten Hilfssensor und dem rechten Kommunikationsbus, während Daten bezüglich der Verfolgung des rechten Auges unter Verwendung des Verfolgers für das rechte Auge abgetastet werden.

2. Verfolgungssystem (200, 302) nach Anspruch 1, wobei die Daten bezüglich der Verfolgung des linken Auges und die Daten bezüglich der Verfolgung des rechten Auges in einer zeitmultiplexierten Weise abgetastet werden.

3. Verfolgungssystem (200, 302) nach einem der vorstehenden Ansprüche, wobei der Prozessor (208, 308) konfiguriert ist zum:
Auslesen der Daten bezüglich der Verfolgung des linken Auges aus dem Verfolger (204a, 304a) für das linke Auge während einer Zeitspanne, in der die Daten bezüglich der Verfolgung des rechten Auges abgetastet werden; und
Auslesen der Daten bezüglich der Verfolgung des rechten Auges aus dem Verfolger (204b, 304b) für das rechte Auge während einer anderen Zeitspanne, in der die Daten bezüglich der Verfolgung des linken Auges abgetastet werden.

4. Verfolgungssystem (200, 302) nach einem der vorstehenden Ansprüche, ferner umfassend mindestens eine wiederaufladbare Energiequelle, die dazu verwendet wird, dem Verfolger (204a, 304a) für das linke Auge, dem Verfolger (204b, 304b) für das rechte Auge, dem mindestens einen linken Hilfssensor (206a, 306a-c), dem mindestens einen rechten Hilfssensor (206b, 306d-f) und dem Prozessor (208, 308) elektrische Energie zuzuführen,
wobei der Prozessor konfiguriert ist zum:
Erkennen, wenn ein Ladezustand der mindestens einen wiederaufladbaren Energiequelle über einem ersten vordefinierten Schwellenpegel liegt; und
wenn erkannt wird, dass der Ladezustand über dem ersten vordefinierten Schwellenpegel liegt,
Auslesen von linken Sensordaten aus dem mindestens einen linken Hilfssensor durch Zulassen einer Kommunikation zwischen dem mindestens einen linken Hilfssensor und dem linken Kommunikationsbus (210a, 310a), während einer Zeitspanne, in der die Daten bezüglich der Verfolgung des rechten Auges abgetastet werden; und
Auslesen von rechten Sensordaten aus dem mindestens einen rechten Hilfssensor durch Zulassen einer Kommunikation zwischen dem mindestens einen rechten Hilfssensor und dem rechten Kommunikationsbus (210b, 310b), während einer anderen Zeitspanne, in der die Daten bezüglich der Verfolgung des linken Auges abgetastet werden.

5. Verfolgungssystem (200, 302) nach einem der vorstehenden Ansprüche, ferner umfassend mindestens eine wiederaufladbare Energiequelle, die dazu verwendet wird, dem Verfolger (204a, 304a) für das linke Auge, dem Verfolger (204b, 304b) für das rechte Auge, dem mindestens einen linken Hilfssensor (206a, 306a-c), dem mindestens einen rechten Hilfssensor (206b, 306d-f) und dem Prozessor (208, 308) elektrische Energie zuzuführen,
wobei der Prozessor konfiguriert ist zum:
Erkennen, wenn ein Ladezustand der mindestens einen wiederaufladbaren Energiequelle eines von Folgendem ist: (i) nicht über einem ersten vordefinierten Schwellenpegel, (ii) unter einem zweiten vordefinierten Schwellenpegel; und
wenn erkannt wird, dass der Ladezustand eines von Folgendem ist: (i) nicht über dem ersten vordefinierten Schwellenpegel, (ii) unter dem zweiten vordefinierten Schwellenpegel,
Auslesen von linken Sensordaten aus dem mindestens einen linken Hilfssensor durch Zulassen einer Kommunikation zwischen dem mindestens einen linken Hilfssensor und dem linken Kommunikationsbus (210a, 310a), während jedes M-ten Zyklus der Abtastung der Daten bezüglich der Verfolgung des rechten Auges, wobei M eine ganze Zahl ist, deren Wert größer als oder gleich 2 ist; und
Auslesen von rechten Sensordaten aus dem mindestens einen rechten Hilfssensor durch Zulassen einer Kommunikation zwischen dem mindestens einen rechten Hilfssensor und dem rechten Kommunikationsbus (210b, 310b), während jedes N-ten Zyklus der Abtastung der Daten bezüglich der Verfolgung des linken Auges, wobei N eine ganze Zahl ist, deren Wert größer als oder gleich 2 ist.

6. Verfolgungssystem (200, 302) nach einem der vorstehenden Ansprüche, wobei mindestens einer von: dem mindestens einen linken Hilfssensor (206a, 306a-c), dem mindestens einen rechten Hilfssensor (206b, 306d-f) einen Temperaturfühler umfasst, der zur Erfassung einer Umgebungstemperatur verwendet wird, und wobei der Prozessor (208, 308) konfiguriert ist zum:
Erkennen, wenn die Umgebungstemperatur eines von Folgendem ist: (i) über einer ersten vordefinierten Schwellentemperatur, (ii) unter einer zweiten vordefinierten Schwellentemperatur; und
wenn erkannt wird, dass die Umgebungstemperatur eines von Folgendem ist: (i) über der ersten vordefinierten Schwellentemperatur, (ii) unter der zweiten vordefinierten Schwellentemperatur,
Auslesen von linken Sensordaten aus dem mindestens einen linken Hilfssensor durch Zulassen einer Kommunikation zwischen dem mindestens einen linken Hilfssensor und dem linken Kommunikationsbus (210a, 310a), während jedes K-ten Zyklus der Abtastung der Daten bezüglich der Verfolgung des rechten Auges, wobei K eine ganze Zahl ist, deren Wert größer als oder gleich 2 ist; und
Auslesen von rechten Sensordaten aus dem mindestens einen rechten Hilfssensor durch Zulassen einer Kommunikation zwischen dem mindestens einen rechten Hilfssensor und dem rechten Kommunikationsbus (210b, 310b), während jedes L-ten Zyklus der Abtastung der Daten bezüglich der Verfolgung des linken Auges, wobei L eine ganze Zahl ist, deren Wert größer als oder gleich 2 ist.

7. Verfolgungssystem (200, 302) nach einem der vorstehenden Ansprüche, wobei mindestens einer von: dem mindestens einen linken Hilfssensor (206a, 306a-c), dem mindestens einen rechten Hilfssensor (206b, 306d-f) einen Temperaturfühler umfasst, und mindestens einer von: dem mindestens einen linken Hilfssensor, dem mindestens einen rechten Hilfssensor mindestens einen von: einem Ultraviolettsensor, einem Umgebungslichtsensor umfasst, wobei ein gegebener Augenverfolger eine Vielzahl von Lichtemittern und eine Vielzahl von Lichtsensoren umfasst,
wobei der Prozessor (208, 308) konfiguriert ist zum:
Erkennen von mindestens einem von Folgendem: (i) wenn von dem Ultraviolettsensor ausgelesene Ultraviolettlichtintensitäten über einem vordefinierten Schwellen-Ultraviolettpegel liegen, (ii) wenn eine von dem Umgebungslichtsensor ausgelesene durchschnittliche Beleuchtungsstärke über einer vordefinierten Schwellen-Beleuchtungsstärke liegt; und
wenn mindestens eines von Folgendem erkannt wird: (i) die Ultraviolettlichtintensitäten liegen über dem vordefinierten Schwellen-Ultraviolettpegel, (ii) die durchschnittliche Beleuchtungsstärke liegt über der vordefinierten Schwellen-Beleuchtungsstärke,
Erhöhen einer Beleuchtungsintensität jedes Lichtemitters;
Verringern einer Abtastfrequenz des Temperaturfühlers; und
Erhöhen einer Abtastfrequenz des Ultraviolettsensors.

8. Verfahren, das durch ein Verfolgungssystem (200, 302) implementiert wird, das einen Verfolger (204a, 304a) für das linke Auge und einen Verfolger (204b, 304b) für das rechte Auge, mindestens einen linken Hilfssensor (206a, 306a-c) und mindestens einen rechten Hilfssensor (206b, 306d-f), einen Prozessor (208, 308), einen linken Kommunikationsbus (210a, 310a), der den Prozessor kommunikativ mit dem mindestens einen linken Hilfssensor koppelt, und einen rechten Kommunikationsbus (210b, 310b), der den Prozessor kommunikativ mit dem mindestens einen rechten Hilfssensor koppelt, umfasst, wobei jeder von dem Verfolger für das linke Auge und dem Verfolger für das rechte Auge eine Vielzahl von Lichtemittern, eine Vielzahl von Lichtsensoren und einen Analog-Front-End-Chip (AFE-Chip) umfasst, wobei die Vielzahl von Lichtemittern als Infrarot-Emitter (IR-Emitter) implementiert sind, während die Vielzahl von Lichtsensoren als IR-Sensoren implementiert sind, und wobei der mindestens eine linke Hilfssensor und der mindestens eine rechte Hilfssensor periphere Sensoren sind, wobei das Verfahren umfasst:
vorübergehendes Deaktivieren der Kommunikation zwischen dem mindestens einen linken Hilfssensor und dem linken Kommunikationsbus, während Daten bezüglich der Verfolgung des linken Auges unter Verwendung des Verfolgers für das linke Auge abgetastet werden; und
vorübergehendes Deaktivieren der Kommunikation zwischen dem mindestens einen rechten Hilfssensor und dem rechten Kommunikationsbus, während Daten bezüglich der Verfolgung des rechten Auges unter Verwendung des Verfolgers für das rechte Auge abgetastet werden.

9. Verfahren nach Anspruch 8, wobei die Daten bezüglich der Verfolgung des linken Auges und die Daten bezüglich der Verfolgung des rechten Auges in einer zeitmultiplexierten Weise abgetastet werden.

10. Verfahren nach einem der Ansprüche 8 bis 9, ferner umfassend:
Auslesen der Daten bezüglich der Verfolgung des linken Auges aus dem Verfolger (204a, 304a) für das linke Auge während einer Zeitspanne, in der die Daten bezüglich der Verfolgung des rechten Auges abgetastet werden; und
Auslesen der Daten bezüglich der Verfolgung des rechten Auges aus dem Verfolger (204b, 304b) für das rechte Auge während einer anderen Zeitspanne, in der die Daten bezüglich der Verfolgung des linken Auges abgetastet werden.

11. Verfahren nach einem der Ansprüche 8 bis 10, ferner umfassend:
Erkennen, wenn ein Ladezustand der mindestens einen wiederaufladbaren Energiequelle des Verfolgungssystems (200, 302) über einem ersten vordefinierten Schwellenpegel liegt; und
wenn erkannt wird, dass der Ladezustand über dem ersten vordefinierten Schwellenpegel liegt,
Auslesen von linken Sensordaten aus dem mindestens einen linken Hilfssensor (206a, 306a-c) durch Zulassen einer Kommunikation zwischen dem mindestens einen linken Hilfssensor und dem linken Kommunikationsbus (210a, 310a), während einer Zeitspanne, in der die Daten bezüglich der Verfolgung des rechten Auges abgetastet werden; und
Auslesen von rechten Sensordaten aus dem mindestens einen rechten Hilfssensor (206b, 306d-f) durch Zulassen einer Kommunikation zwischen dem mindestens einen rechten Hilfssensor und dem rechten Kommunikationsbus (210b, 310b), während einer anderen Zeitspanne, in der die Daten bezüglich der Verfolgung des linken Auges abgetastet werden.

12. Verfahren nach einem der Ansprüche 8 bis 11, ferner umfassend:
Erkennen, wenn ein Ladezustand der mindestens einen wiederaufladbaren Energiequelle des Verfolgungssystems (200, 302) eines von Folgendem ist: (i) nicht über einem ersten vordefinierten Schwellenpegel, (ii) unter einem zweiten vordefinierten Schwellenpegel; und
wenn erkannt wird, dass der Ladezustand eines von Folgendem ist: (i) nicht über dem ersten vordefinierten Schwellenpegel, (ii) unter dem zweiten vordefinierten Schwellenpegel,
Auslesen von linken Sensordaten aus dem mindestens einen linken Hilfssensor (206a, 306a-c) durch Zulassen einer Kommunikation zwischen dem mindestens einen linken Hilfssensor und dem linken Kommunikationsbus (210a, 310a), während jedes M-ten Zyklus der Abtastung der Daten bezüglich der Verfolgung des rechten Auges, wobei M eine ganze Zahl ist, deren Wert größer als oder gleich 2 ist; und
Auslesen von rechten Sensordaten aus dem mindestens einen rechten Hilfssensor (206b, 306d-f) durch Zulassen einer Kommunikation zwischen dem mindestens einen rechten Hilfssensor und dem rechten Kommunikationsbus (210b, 310b), während jedes N-ten Zyklus der Abtastung der Daten bezüglich der Verfolgung des linken Auges, wobei N eine ganze Zahl ist, deren Wert größer als oder gleich 2 ist.

13. Verfahren nach einem der Ansprüche 8 bis 12, ferner umfassend:
Erkennen, wenn eine Umgebungstemperatur des Verfolgungssystems (200, 302) eines von Folgendem ist: (i) über einer ersten vordefinierten Schwellentemperatur, (ii) unter einer zweiten vordefinierten Schwellentemperatur; und
wenn erkannt wird, dass die Umgebungstemperatur eines von Folgendem ist: (i) über der ersten vordefinierten Schwellentemperatur, (ii) unter der zweiten vordefinierten Schwellentemperatur,
Auslesen von linken Sensordaten aus dem mindestens einen linken Hilfssensor (206a, 306a-c) durch Zulassen einer Kommunikation zwischen dem mindestens einen linken Hilfssensor und dem linken Kommunikationsbus (210a, 310a), während jedes K-ten Zyklus der Abtastung der Daten bezüglich der Verfolgung des rechten Auges, wobei K eine ganze Zahl ist, deren Wert größer als oder gleich 2 ist; und
Auslesen von rechten Sensordaten aus dem mindestens einen rechten Hilfssensor (206b, 306d-f) durch Zulassen einer Kommunikation zwischen dem mindestens einen rechten Hilfssensor und dem rechten Kommunikationsbus (210b, 310b), während jedes L-ten Zyklus der Abtastung der Daten bezüglich der Verfolgung des linken Auges, wobei L eine ganze Zahl ist, deren Wert größer als oder gleich 2 ist.

14. Verfahren nach einem der Ansprüche 8 bis 13, wobei ein gegebener Augenverfolger eine Vielzahl von Lichtemittern und eine Vielzahl von Lichtsensoren umfasst, wobei das Verfahren ferner umfasst:
Erkennen von mindestens einem von Folgendem: (i) wenn von einem Ultraviolettsensor des Verfolgungssystems (200, 302) ausgelesene Ultraviolettlichtintensitäten über einem vordefinierten Schwellen-Ultraviolettpegel liegen, (ii) wenn eine von einem Umgebungslichtsensor des Verfolgungssystems ausgelesene durchschnittliche Beleuchtungsstärke über einer vordefinierten Schwellen-Beleuchtungsstärke liegt; und
wenn mindestens eines von Folgendem erkannt wird: (i) die Ultraviolettlichtintensitäten liegen über dem vordefinierten Schwellen-Ultraviolettpegel, (ii) die durchschnittliche Beleuchtungsstärke liegt über der vordefinierten Schwellen-Beleuchtungsstärke,
Erhöhen einer Beleuchtungsintensität jedes Lichtemitters;
Verringern einer Abtastfrequenz eines Temperatursensors des Verfolgungssystems; und
Erhöhen einer Abtastfrequenz des Ultraviolettsensors.

## Revendications

1. Système de suivi (200, 302) pour une lunette adaptative (202), le système de suivi comprenant :
un oculomètre gauche (204a, 304a) et un oculomètre droit (204b, 304b) pour une partie gauche et une partie droite de la lunette adaptative, respectivement, dans lequel chacun de l'oculomètre gauche et de l'oculomètre droit comprend une pluralité d'émetteurs de lumière, une pluralité de capteurs de lumière et une puce frontale analogique (AFE), dans lequel la pluralité d'émetteurs de lumière sont mis en œuvre en tant qu'émetteurs infrarouges (IR), tandis que la pluralité de capteurs de lumière sont mis en œuvre en tant que capteurs IR ;
au moins un capteur auxiliaire gauche (206a, 306a-c) et au moins un capteur auxiliaire droit (206b, 306d-f) agencés sur la partie gauche et la partie droite, respectivement, dans lequel l'au moins un capteur auxiliaire gauche et l'au moins un capteur auxiliaire droit sont des capteurs périphériques ;
un processeur (208, 308) ;
un bus de communication gauche (210a, 310a) qui est utilisé pour coupler en communication le processeur à l'au moins un capteur auxiliaire gauche ; et
un bus de communication droit (210b, 310b) qui est utilisé pour coupler en communication le processeur à l'au moins un capteur auxiliaire droit,
dans lequel le processeur est configuré pour :
désactiver temporairement la communication entre l'au moins un capteur auxiliaire gauche et le bus de communication gauche, pendant l'échantillonnage de données de suivi oculaire gauches à l'aide de l'oculomètre gauche ; et
désactiver temporairement la communication entre l'au moins un capteur auxiliaire droit et le bus de communication droit, tout en échantillonnant des données de suivi oculaire droit à l'aide de l'oculomètre droit.

2. Système de suivi (200, 302) selon la revendication 1, dans lequel les données de suivi oculaire gauches et les données de suivi oculaire droites sont échantillonnées de manière multiplexée dans le temps.

3. Système de suivi (200, 302) selon l'une quelconque des revendications précédentes, dans lequel le processeur (208, 308) est configuré pour :
lire les données de suivi oculaire gauches à partir de l'oculomètre gauche (204a, 304a), pendant une période de temps où les données de suivi oculaire droites sont échantillonnées ; et
lire les données de suivi oculaire droites à partir de l'oculomètre droit (204b, 304b), pendant une autre période de temps où les données de suivi oculaire gauches sont échantillonnées.

4. Système de suivi (200, 302) selon l'une quelconque des revendications précédentes, comprenant en outre au moins une source d'énergie rechargeable qui est utilisée pour fournir de l'énergie électrique à l'oculomètre gauche (204a, 304a), à l'oculomètre droit (204b, 304b), à l'au moins un capteur auxiliaire gauche (206a, 306a-c), à l'au moins un capteur auxiliaire droit (206b, 306d-f) et au processeur (208, 308),
dans lequel le processeur est configuré pour :
détecter lorsqu'un niveau de charge de l'au moins une source d'alimentation rechargeable est supérieur à un premier niveau seuil prédéfini ; et
lorsqu'il est détecté que le niveau de charge est supérieur au premier niveau seuil prédéfini,
lire des données de capteur gauche à partir de l'au moins un capteur auxiliaire gauche en permettant une communication entre l'au moins un capteur auxiliaire gauche et le bus de communication gauche (210a, 310a), pendant une période de temps où les données de suivi oculaire droit sont échantillonnées ; et
lire des données de capteur droit à partir de l'au moins un capteur auxiliaire droit en permettant une communication entre l'au moins un capteur auxiliaire droit et le bus de communication droit (210b, 310b), pendant une autre période de temps où les données de suivi oculaire gauches sont échantillonnées.

5. Système de suivi (200, 302) selon l'une quelconque des revendications précédentes, comprenant en outre au moins une source d'énergie rechargeable qui est utilisée pour fournir de l'énergie électrique à l'oculomètre gauche (204a, 304a), à l'oculomètre droit (204b, 304b), à l'au moins un capteur auxiliaire gauche (206a, 306a-c), à l'au moins un capteur auxiliaire droit (206b, 306d-f) et au processeur (208, 308),
dans lequel le processeur est configuré pour :
détecter lorsqu'un niveau de charge de l'au moins une source d'alimentation rechargeable est l'un quelconque parmi : (i) non supérieur à un premier niveau seuil prédéfini, (ii) inférieur à un second niveau seuil prédéfini ; et
lorsqu'il est détecté que le niveau de charge est l'un quelconque parmi : (i) non supérieur au premier niveau seuil prédéfini, (ii) inférieur au second niveau seuil prédéfini,
lire des données de capteur gauche à partir de l'au moins un capteur auxiliaire gauche en permettant une communication entre l'au moins un capteur auxiliaire gauche et le bus de communication gauche (210a, 310a), pendant chaque M^{ième} cycle d'échantillonnage des données de suivi oculaire droites, dans lequel M est un nombre entier dont la valeur est supérieure ou égale à 2 ; et
lire des données de capteur droit à partir de l'au moins un capteur auxiliaire droit en permettant une communication entre l'au moins un capteur auxiliaire droit et le bus de communication droit (210b, 310b), pendant chaque N^{ième} cycle d'échantillonnage des données de suivi oculaire gauches, dans lequel N est un nombre entier dont la valeur est supérieure ou égale à 2.

6. Système de suivi (200, 302) selon l'une quelconque des revendications précédentes, dans lequel au moins un parmi : l'au moins un capteur auxiliaire gauche (206a, 306a-c), l'au moins un capteur auxiliaire droit (206b, 306d-f) comprend un capteur de température qui est utilisé pour détecter une température ambiante, et dans lequel le processeur (208, 308) est configuré pour :
détecter lorsque la température ambiante est l'une quelconque parmi : (i) supérieure à une première température seuil prédéfinie, (ii) inférieure à une seconde température seuil prédéfinie ; et
lorsqu'il est détecté que la température ambiante est l'une quelconque parmi : (i) supérieure à la première température seuil prédéfinie, (ii) inférieure à la seconde température seuil prédéfinie,
lire des données de capteur gauche à partir de l'au moins un capteur auxiliaire gauche en permettant une communication entre l'au moins un capteur auxiliaire gauche et le bus de communication gauche (210a, 310a), pendant chaque K^{ième} cycle d'échantillonnage des données de suivi oculaire droites, dans lequel K est un nombre entier dont la valeur est supérieure ou égale à 2 ; et
lire des données de capteur droit à partir de l'au moins un capteur auxiliaire droit en permettant une communication entre l'au moins un capteur auxiliaire droit et le bus de communication droit (210b, 310b), pendant chaque L^{ième} cycle d'échantillonnage des données de suivi oculaire gauches, dans lequel L est un nombre entier dont la valeur est supérieure ou égale à 2.

7. Système de suivi (200, 302) selon l'une quelconque des revendications précédentes, dans lequel au moins un parmi : l'au moins un capteur auxiliaire gauche (206a, 306a-c), l'au moins un capteur auxiliaire droit (206b, 306d-f) comprend un capteur de température, et au moins un parmi : l'au moins un capteur auxiliaire gauche, l'au moins un capteur auxiliaire droit comprend au moins un parmi : un capteur ultraviolet, un capteur de lumière ambiante, dans lequel un oculomètre donné comprend une pluralité d'émetteurs de lumière et une pluralité de capteurs de lumière,
dans lequel le processeur (208, 308) est configuré pour :
détecter au moins un parmi : (i) lorsque les intensités de lumière ultraviolette lues par le capteur d'ultraviolets sont supérieures à un niveau ultraviolet seuil prédéfini, (ii) lorsqu'un éclairement moyen lu par le capteur de lumière ambiante est supérieur à un éclairement seuil prédéfini ; et
lorsqu'au moins un des éléments suivants est détecté : (i) les intensités de lumière ultraviolette sont supérieures au niveau ultraviolet seuil prédéfini, (ii) l'éclairement moyen est supérieur à l'éclairement seuil prédéfini,
augmenter une intensité d'illumination de chaque émetteur de lumière ;
diminuer une fréquence d'échantillonnage du capteur de température ; et
augmenter une fréquence d'échantillonnage du capteur ultraviolet.

8. Procédé mis en œuvre par un système de suivi (200, 302) comprenant un oculomètre gauche (204a, 304a) et un oculomètre droit (204b, 304b), au moins un capteur auxiliaire gauche (206a, 306a-c) et au moins un capteur auxiliaire droit (206b, 306d-f), un processeur (208, 308), un bus de communication gauche (210a, 310a) couplant en communication le processeur à l'au moins un capteur auxiliaire gauche et un bus de communication droit (210b, 310b) couplant en communication le processeur à l'au moins un capteur auxiliaire droit, dans lequel chacun de l'oculomètre gauche et de l'oculomètre droit comprend une pluralité d'émetteurs de lumière, une pluralité de capteurs de lumière et une puce frontale analogique (AFE), dans lequel la pluralité des émetteurs de lumière sont mis en œuvre en tant qu'émetteurs infrarouges (IR), tandis que la pluralité de capteurs de lumière sont mis en œuvre en tant que capteurs IR, et dans lequel l'au moins un capteur auxiliaire gauche et l'au moins un capteur auxiliaire droit sont des capteurs périphériques, le procédé comprenant :
la désactivation temporaire d'une communication entre l'au moins un capteur auxiliaire gauche et le bus de communication gauche, pendant l'échantillonnage de données de suivi oculaire gauches à l'aide de l'oculomètre gauche ; et
la désactivation temporaire d'une communication entre l'au moins un capteur auxiliaire droit et le bus de communication droit, pendant l'échantillonnage de données de suivi oculaire droit à l'aide de l'oculomètre droit.

9. Procédé selon la revendication 8, dans lequel les données de suivi oculaire gauches et les données de suivi oculaire droites sont échantillonnées de manière multiplexée dans le temps.

10. Procédé selon l'une quelconque des revendications 8 à 9, comprenant en outre :
la lecture des données de suivi oculaire gauches à partir de l'oculomètre gauche (204a, 304a), pendant une période de temps où les données de suivi oculaire droites sont échantillonnées ; et
la lecture des données de suivi oculaire droites à partir de l'oculomètre droit (204b, 304b), pendant une autre période de temps où les données de suivi oculaire gauches sont échantillonnées.

11. Procédé selon l'une quelconque des revendications 8 à 10, comprenant en outre :
la détection lorsqu'un niveau de charge d'au moins une source d'énergie rechargeable du système de suivi (200, 302) est supérieur à un premier niveau seuil prédéfini ; et
lorsqu'il est détecté que le niveau de charge est supérieur au premier niveau seuil prédéfini,
la lecture de données de capteur gauche provenant de l'au moins un capteur auxiliaire gauche (206a, 306a-c) en permettant une communication entre l'au moins un capteur auxiliaire gauche et le bus de communication gauche (210a, 310a), pendant une période de temps où les données de suivi oculaire droit sont échantillonnées ; et
la lecture de données de capteur droit provenant de l'au moins un capteur auxiliaire droit (206b, 306d-f) en permettant une communication entre l'au moins un capteur auxiliaire droit et le bus de communication droit (210b, 310b), pendant une autre période de temps où les données de suivi oculaire gauches sont échantillonnées.

12. Procédé selon l'une quelconque des revendications 8 à 11, comprenant en outre :
la détection du fait qu'un niveau de charge d'au moins une source d'énergie rechargeable du système de suivi (200, 302) est l'un quelconque parmi : (i) non supérieur à un premier niveau seuil prédéfini, (ii) inférieur à un second niveau seuil prédéfini ; et
lorsqu'il est détecté que le niveau de charge est l'un quelconque parmi : (i) non supérieur au premier niveau seuil prédéfini, (ii) inférieur au second niveau seuil prédéfini,
la lecture de données de capteur gauche provenant de l'au moins un capteur auxiliaire gauche (206a, 306a-c) en permettant une communication entre l'au moins un capteur auxiliaire gauche et le bus de communication gauche (210a, 310a), pendant chaque M^{ième} cycle d'échantillonnage des données de suivi oculaire droites, dans lequel M est un nombre entier dont la valeur est supérieure ou égale à 2 ; et
la lecture de données de capteur droit provenant de l'au moins un capteur auxiliaire droit (206b, 306d-f) en permettant une communication entre l'au moins un capteur auxiliaire droit et le bus de communication droit (210b, 310b), pendant chaque N^{ième} cycle d'échantillonnage des données de suivi oculaire gauches, dans lequel N est un nombre entier dont la valeur est supérieure ou égale à 2.

13. Procédé selon l'une quelconque des revendications 8 à 12, comprenant en outre :
la détection du moment où une température ambiante du système de suivi (200, 302) est l'une quelconque parmi : (i) supérieure à une première température seuil prédéfinie, (ii) inférieure à une seconde température seuil prédéfinie ; et
lorsqu'il est détecté que la température ambiante est l'une quelconque parmi : (i) supérieure à la première température seuil prédéfinie, (ii) inférieure à la seconde température seuil prédéfinie,
la lecture de données de capteur gauche provenant de l'au moins un capteur auxiliaire gauche (206a, 306a-c) en permettant une communication entre l'au moins un capteur auxiliaire gauche et le bus de communication gauche (210a, 310a), pendant chaque K^{ième} cycle d'échantillonnage des données de suivi oculaire droites, dans lequel K est un nombre entier dont la valeur est supérieure ou égale à 2 ; et
la lecture de données de capteur droit provenant de l'au moins un capteur auxiliaire droit (206b, 306d-f) en permettant une communication entre l'au moins un capteur auxiliaire droit et le bus de communication droit (210b, 310b), pendant chaque L^{ième} cycle d'échantillonnage des données de suivi oculaire gauches, dans lequel L est un nombre entier dont la valeur est supérieure ou égale à 2.

14. Procédé selon l'une quelconque des revendications 8 à 13, dans lequel un oculomètre donné comprend une pluralité d'émetteurs de lumière et une pluralité de capteurs de lumière, le procédé comprenant en outre :
la détection d'au moins un parmi : (i) lorsque les intensités de lumière ultraviolette lues par un capteur ultraviolet du système de suivi (200, 302) sont supérieures à un niveau ultraviolet seuil prédéfini, (ii) lorsqu'un éclairement moyen lu par un capteur de lumière ambiante du système de suivi est supérieur à un éclairement seuil prédéfini ; et
lorsqu'au moins un des éléments suivants est détecté : (i) les intensités de lumière ultraviolette sont supérieures au niveau ultraviolet seuil prédéfini, (ii) l'éclairement moyen est supérieur à l'éclairement seuil prédéfini,
l'augmentation d'une intensité d'illumination de chaque émetteur de lumière ;
la diminution d'une fréquence d'échantillonnage d'un capteur de température du système de suivi ; et
l'augmentation d'une fréquence d'échantillonnage du capteur ultraviolet.
